# EUROPEAN PATENT SPECIFICATION

(11) **EP 0 426 035 B1**
(45) Date of publication and mention of the grant of the patent: **20.12.1995**
(21) Application number: 90120598.9
(22) Date of filing: 26.10.1990
(51) Int. Cl.: G11B 7/13

(54) **Optical head**
Optischer Kopf
Dispositif avec tête optique

(30) Priority: 02.11.1989 JP 288323/89
(43) Date of publication of application: 08.05.1991
(73) Proprietor: SHARP KABUSHIKI KAISHA, Osaka 545 (JP)
(72) Inventor: Katayama, Hiroshi, Higashihiroshima-shi, Hiroshima-ken (JP)
(74) Representative: TER MEER STEINMEISTER & PARTNER GbR

(56) References cited:
- EP-A- 0 145 296
- EP-A- 0 208 212
- EP-A- 0 223 576
- EP-A- 0 385 537
- FR-A- 2 595 857

## Description

The present invention relates to an optical head for use in optical information recording/reproducing devices. More particularly it relates to an optical head capable of adjusting the detection output signal of an optical power detector employed for detecting the optical power of a semiconductor laser within the head.

EP-A-0 223 576 describes an optical head comprising:
- a semiconductor laser emitting a laser beam;
- an optical system for leading said laser beam onto a recording medium;
- an optical power detector for detecting the power of said laser beam and for outputting a related detection output signal;
- a current-to-voltage conversion circuit for converting said detection output signal into a voltage and being arranged that its frequency bandwidth may be set as desired;
- an output terminal for outputting a voltage related to said detection output signal from said current-to-voltage conversion circuit.

In this optical head, a resistor which serves for adjusting the voltage output to the output terminal is connected to the input side of an operational amplifier.

Optical heads which are very similar to the head as mentioned above are described in EP-A 0 208 212 and in EP-A-0 385 537, whereby the latter one is based on a preapplied but not prepublished application. In all these optical heads, a variable resistor is connected to an input terminal of an operational amplifier. Due to this construction, not only the voltage as supplied to the output terminal depends from the adjustment position of a variable resistor, but also the frequency bandwidth of the current-to-voltage conversion circuit depends on this position.

It is the object of the present invention to provide an optical head in which the output voltage may be adjusted, and in which the frequency bandwidth of the current-to-voltage conversion circuit may be set as desired.

The optical head of the present invention comprises the above listed features of the prior art head, and it is characterized in that
a voltage divider is connected to the output side of said current-to-voltage conversion circuit and has an adjustable tap connected to said output terminal.

As the voltage divider which serves for adjusting the output voltage is a resistor which is connected to the output side of the current-to-voltage conversion circuit, and which has an adjustable tap, any adjustment of the output voltage by adjusting said tap is practically without influence on the frequency bandwidth characteristics of the current-to-voltage conversion circuit, and therefore, this frequency bandwidth may be set as desired without being influenced by the adjustment of the output voltage.

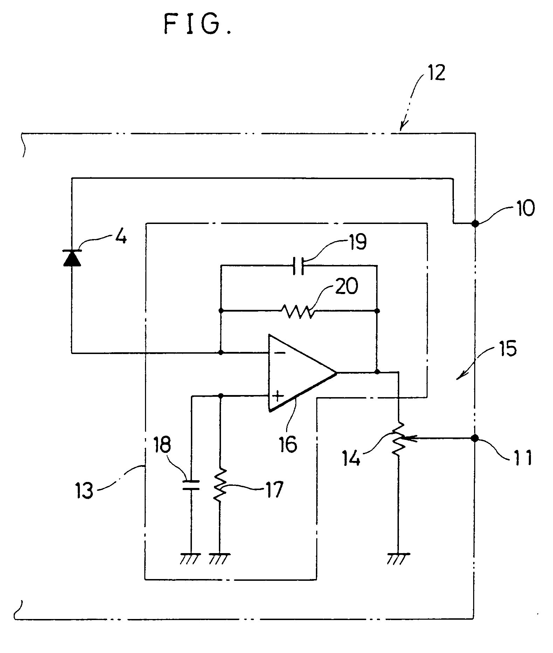

For a fuller understanding of the nature and advantages of the invention, reference should be made to the ensuing detailed description taken in conjunction with the single figure which shows a circuit diagram of a detection output adjusting means installed in an optical head.

Within the optical head 12, only a detection output adjusting means 15 is drawn, by omitting a semiconducting laser and an optical system as they are generally present in optical heads for use in optical information recording/reproducing devices. The detection output adjusting means 15 is composed of a current-to-voltage conversion circuit 13 and a resistor 14 having an adjustable terminal. The optical head 12 is designed such that the cathode of the photodiode 4 is connected to the output terminal 10, and the anode of the same is connected to the inverting input terminal of an operational amplifier 16 housed in the current-to-voltage conversion circuit 13. The non-inverting input terminal of the operational amplifier 16 is grounded via a resistor 17 and a capacitor 18, the capacitor 18 being mounted in parallel with the resistor 17. In addition, a capacitor 19 and a resistor 20 are mounted in parallel and disposed between the inverting input terminal and the output terminal of the operational amplifier 16. The output terminal of the operational amplifier 16 is grounded via the resistor 14 whose adjustable terminal is connected to an output terminal 11 of the optical head 12.

This arrangement enables to adjust the voltage output to said output terminal 11 of said optical head 12 to be adjusted by means of the resistor 14 having the adjustable terminal. The current-to-voltage conversion circuit 13 is disposed between the photodiode 4 and said resistor 14; the photocurrent produced by the photodiode 4 that flows into the inverting input terminal of the operational amplifier 16 is converted into a voltage. The optical head 12 of the present embodiment thus presents the advantage that the frequency bandwidth may be set as desired in the current-to-voltage conversion circuit 13.

## Claims

1. An optical head (12) comprising:
a semiconductor laser emitting a laser beam;
an optical system for leading said laser beam onto a recording medium;
an optical power detector (4) for detecting the power of said laser beam and for outputting a related detection output signal;
a current-to-voltage conversion circuit (13) for converting said detection output signal into a voltage and being arranged that its frequency bandwidth may be set as desired;
an output terminal (11) for outputting a voltage related to said detection output signal from said current-to-voltage conversion circuit (13);
characterized in that
a voltage divider (14) is connected to the output side of said current-to-voltage conversion circuit (13) and has an adjustable tap connected to said output terminal (11).

2. An optical head as defined in claim 1, **characterized in that** said current-to-voltage conversion circuit (13) comprises:
- an operational amplifier (16) provided with an inverting input terminal, a non-inverting input terminal and an output terminal;
- a resistor (17) and a capacitor (18) mounted in parallel between said non-inverting input terminal and ground; and
- a capacitor (19) and a resistor (20) mounted in parallel between said inverting input terminal and said output terminal;
- whereby said resistor (14) having the adjustable terminal is connected to said output terminal.

## Patentansprüche

1. Optischer Kopf (12) mit:
- einem einen Laserstrahl emittierenden Halbleiterlaser;
- einem optischen System zum Hinleiten des Laserstrahls auf ein Aufzeichnungsmedium;
- einem optischen Leistungsdetektor (4) zum Erfassen der Leistung des Laserstrahls und zum Ausgeben eines zugehörigen Meßausgangssignals;
- einer Strom-Spannung-Umsetzschaltung (13) zum Umsetzen des Meßausgangssignals in eine Spannung, die so ausgebildet ist, daß ihre Frequenzbandbreite nach Wunsch eingestellt werden kann; und
- einem Ausgangsanschluß (11) zum Ausgeben einer mit dem Meßausgangssignal der Strom-Spannung-Umsetzschaltung (13) in Beziehung stehenden Spannung;
**dadurch gekennzeichnet, daß**
- ein Spannungsteiler (14) mit der Ausgangsseite der Strom-Spannung-Umsetzschaltung (13) verbunden ist, der einen einstellbaren Abgriff aufweist, der mit dem Ausgangsanschluß (11) verbunden ist.

2. Optischer Kopf nach Anspruch 1, **dadurch gekennzeichnet**, **daß** die Strom-Spannung-Umsetzschaltung (13) folgendes aufweist:
- einen Operationsverstärker (16) mit einem invertierenden Eingangsanschluß, einem nichtinvertierenden Eingangsanschluß und einem Ausgangsanschluß;
- einen Widerstand (17) und einen Kondensator (18), die parallel zwischen den nichtinvertierenden Eingangsanschluß und Masse geschaltet sind; und
- einen Kondensator (19) und einen Widerstand (20), die parallel zwischen den invertierenden Eingangsanschluß und den Ausgangsanschluß geschaltet sind;
- wobei der einstellbare Anschluß des Widerstands (14) mit dem Ausgangsanschluß verbunden ist.

## Revendications

1. Tête optique (12) comprenant:
un laser à semiconducteur émettant un faisceau laser;
un système optique pour mener ledit faisceau laser sur un support d'enregistrement;
un détecteur d'énergie optique (4) pour détecter l'énergie dudit faisceau laser et pour délivrer un signal de sortie de détection en rapport;
un circuit de conversion de courant en tension (13) destiné à convertir ledit signal de sortie de détection en une tension et conçu pour que la largeur de sa bande de fréquence puisse être réglée à volonté;
une borne de sortie (11) pour délivrer une tension en rapport avec ledit signal de sortie de détection, à partir dudit circuit de conversion de courant en tension (13);
caractérisée en ce que
un diviseur de tension (14) est relié au côté sortie dudit circuit de conversion de courant en tension (13) et comporte une prise à position réglable, reliée à ladite borne de sortie (11).

2. Tête optique telle que définie dans la revendication 1, caractérisée en ce que ledit circuit de conversion de courant en tension (13) comprend:
- un amplificateur opérationnel (16) pourvu d'une borne d'entrée inverseuse, d'une borne d'entrée non inverseuse et d'une borne de sortie;
- une résistance (17) et un condensateur (18), montés en parallèle entre ladite borne d'entrée non inverseuse et la masse; et
- un condensateur (19) et une résistance (20), montés en parallèle entre ladite borne d'entrée inverseuse et ladite borne de sortie;
- ladite résistance (14), munie de la borne à position réglable, étant reliée à ladite borne de sortie.
